# EUROPEAN PATENT APPLICATION

(11) **EP 4 546 213 A1**
(43) Date of publication of application: **30.04.2025**
(21) Application number: 23205679.6
(22) Date of filing: 25.10.2023
(51) Int. Cl.: G06N 3/045, G06N 3/0475, G06N 3/08

(54) **SYNTHETIC DATA GENERATION FOR TRAINING VISUAL LANGUAGE MODELS**

(71) Applicant: DeepMind Technologies Limited, London EC4A 3TW (GB)
(72) Inventor: Kaplanis, Christos, London, EC4A 3TW (GB); Mitrovic, Jovana, London, EC4A 3TW (GB); Erdogan, Goker, London, EC4A 3TW (GB); Bauer, Matthias Stephan, London, EC4A 3TW (GB); Blundell, Charles, London, EC4A 3TW (GB)
(74) Representative: Marks & Clerk GST

(57) **Abstract**

A method is proposed for generating a visual language model (VLM) neural network trained to perform a multi-modal task on an input dataset comprising an input image to generate a token output which is a text response to the input dataset. The VLM is trained using a training database comprising tuples of sample input datasets and corresponding sample token outputs. The sample input dataset of some of the tuples comprises an image generated from a text description by a text-to-image model, and the corresponding sample token output comprises at least part of the text description.

## Description

### BACKGROUND

This specification relates to processing input datasets that include images using neural networks.

Neural networks are machine learning models that employ one or more layers of nonlinear units to predict an output for a received input. Some neural networks include one or more hidden layers in addition to an output layer. The output of each hidden layer is used as input to the next layer in the network, e.g., the next hidden layer or the output layer. Each layer of the network generates an output from a received input in accordance with current values of a respective set of parameters.

### SUMMARY

This specification describes a system implemented as computer programs on one or more computers in one or more locations that generates a visual language model neural network ("VLM"); that is, a neural network which performs a multi-modal task on an input dataset comprising at least one input image and optionally one or more input text tokens selected from a vocabulary of text tokens, to generate a token output comprising text tokens (selected from a vocabulary, e.g., the same vocabulary, of text tokens) and representing a text response to the input dataset. In some cases, the multi-modal task is defined by input text tokens included in the input dataset.

In general terms, in the proposed method a VLM is trained using a training database comprising training example tuples comprising sample input datasets and corresponding sample token outputs. The sample input dataset of at least some of the tuples comprises at least one input image generated from a text description by a text-to-image (TtI) model, and the corresponding sample token output comprises at least part of the text description.

By generating tuples in this way, the size of the training database may be increased at low computational cost, permitting the training database to be larger than the training databases which are presently available to train VLMs.

Furthermore, the present method makes possible a training database which enables improved VLM training. Specifically, the text descriptions, and how the sample input datasets and sample token outputs are generated, may be chosen to exemplify "difficult" multi-modal tasks in which conventional VLMs are subject to errors. These may include multi-modal tasks in which forming a text response to the input dataset requires counting objects present in the input images, or correctly describing a positional relationship between objects present in the input images. By performing VLM training using training examples exemplifying difficult tasks, the accuracy of the resulting VLM may be improved.

One expression of a concept described by the present document is a method of generating a visual language model comprising forming a training database, and then training a visual language model based on the training database. In some cases, the training may be fine-tuning a pre-trained visual language model; that is, a visual language model trained using a different training database.

Another expression of the concept is a method of forming training examples for training a visual language model, by:
obtaining a text description of one or more possible images (i.e. text describing the content of an image which may not yet exist but could be created, e.g. "four apples on a table"); and
using a text-to-image model to generate an image from the text description. The training example for training the visual language model comprises the generated image, and least part of the text description. Optionally, this may be done repeatedly to generate training example tuples which are added to a training database for training a visual language model.
A further expression of the concept is a method for training a visual language model based on a training database which has been formed in this way. For example, this may be a method of generating a visual language model neural network trained to perform a multi-modal task on an input dataset comprising at least one input image, to generate a token output comprising text tokens from a vocabulary of text tokens and representing a text response to the input dataset,
the method comprising training a visual language model neural network based on a training database of sample input datasets and corresponding sample token outputs, such as by iteratively modifying the visual language model neural network to reduce the value of a loss function including a multi-modal loss term indicative of a discrepancy between (a) token outputs generated by the visual language model neural network upon receiving sample input datasets from the training database, and (b) corresponding sample tokens;
where the training database is one which has been formed (e.g. previously and/or by a different party) by repeatedly:
   (i) obtaining a text description of a possible image;
   (ii) using a text-to-image model to generate an image from the text description; and
   (iii) forming a tuple including a sample input dataset comprising the generated image, and a corresponding sample token output comprising at least part of the text description, and
   (iv) adding the tuple to the training database.

The present concepts may be expressed as computer-implemented methods. Alternatively, they may be expressed as computer systems configured to perform the methods. Alternatively, they may be expressed as computer program products (e.g. one or more computer-readable storage media, or software products downloadable over a communications network) storing or containing instructions which perform the methods when executed by one or more computer systems.

The details of embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a schematic diagram of an example VLM.
FIG. 2 shows a system for training a VLM.
FIG. 3 is a flow diagram of a method for training a VLM.
FIG. 4 shows possible sub-steps of a step of the method of FIG. 3.
FIG. 5 is composed of FIG. 5(a) which shows an example generated image, and FIG. 5(b) which shows a modified version of the image.
FIG. 6 shows alternative possible sub-steps of a step in the method of FIG. 3.
FIG. 7 is composed of FIG. 7(a) which shows an example generated image, and FIG. 7(b) which shows a modified version of the image.
FIG. 8 shows experimental results.
FIG. 9 shows a system for training a text-to-image model.

Like reference numbers and designations in the various drawings indicate like elements.

### DETAILED DESCRIPTION

This specification describes a method implemented as computer programs on one or more computers in one or more locations that performs one or more multi-modal tasks.

The method is for generating a VLM, and may comprise forming a training database by repeatedly:
(i) obtaining a text description of a possible image;
(ii) using a text-to-image model to generate at least one image from the text description; and
(iii) forming a tuple as a sample input dataset comprising the at least one generated image, and a corresponding sample token output comprising at least part of the text description, and
(iv) adding the tuple to the training database as a training example.

Once multiple tuples have been added to the training database (either augmenting a training database of training example tuples which already existed, such as one created manually, or forming a completely new training database), a visual language model neural network is trained based on the training database.

For simplicity it is assumed in most of the following explanation that there is only a single input image (a still image or a moving image) in each sample input dataset. However, in an implementation there may be multiple images in the sample input dataset of at least some of the training example tuples.

The training of the VLM based on the training database may be performed by any conventional algorithm. Typically it is performed by iteratively modifying the visual language model neural network to reduce the value of a VLM loss function (sometimes here just called a "loss function") including a multi-modal loss term indicative of a difference between token outputs generated by the visual language model neural network upon receiving sample input datasets from the training database, and the corresponding sample token outputs. In some cases, the token output of the visual language model is obtained from a distribution function generated by the visual language model over the space of possible token outputs (e.g. if the distribution function is a probability distribution over possible token outputs, the token output may be sampled from the probability distribution; or the token output may be selected for which the distribution function is maximal), and in this case the multi-modal loss term may be inversely related to the value of the distribution function for the corresponding sample token output (e.g. the probability of the corresponding sample token output according to the probability distribution).

The text descriptions may be generated automatically by a text generator. The word "automatically" is used here to mean a process which is performed substantially without human involvement, save possibly for initiation of the process. For example, this text generator may generate a certain text description by filling in fields in a description template. For example a description template may read "[number] of [object]" or "[number] of [object] [positional relationship] [number] of [object]", where [number] [positional relationship] and [object] are fields to be completed (i.e. filled in with content) by the text generator, i.e. by adding an integer to complete each [number] field, a positional relationship (e.g. "to the left of') to complete the [positional relationship] field, and an object definition to complete each [object] field. Following the completion of these fields, the text generator may be operative to correct any grammatical mistakes in the resulting text description.

This makes it possible for the process of generating training example tuples of sample input datasets/sample token outputs to be performed automatically. Because of this, a large training database can be produced automatically at low computational cost. This is significant, for example, because the training databases which are currently available for training VLMs are much smaller than the text-only databases which are used to train large language models (LLMs). For this reason, many existing VLMs incorporate a LLM which has been trained using a text-only database, and additional components which are used to modify the operation of the LLM to condition it on input images. The additional components may be trained without modifying the LLM, and have a smaller number of variable parameters than the LLM, so that they can be trained with the smaller number of training examples which are available. This makes the input images in input datasets subsidiary to any text in the input datasets. Making it possible to provide training examples more cheaply makes other training algorithms for VLMs possible.

Furthermore, a training database may be produced by the present method which includes specified types of training example tuples, e.g. exemplifying multi-modal tasks of specific types. For example, a selected respective proportion of tuples of each of type may be included in the training database. This makes possible, for example, a training database which enables improved VLM training, by using more training examples in the VLM learning algorithm which exemplify difficult multi-modal tasks, i.e. types of multi-modal task with which existing VLMs have low success. This may be either because the proportion of training example tuples which represent difficult multi-modal tasks is increased (e.g. in a situation in which the VLM learning algorithm selects training example tuples randomly from the training database, e.g. in batches), or because the VLM learning algorithm may be configured to select training examples from the training database which exemplify the difficult multi-modal task(s), e.g. based on a respective labels associated with each training example tuple and indicating which type of multi-modal task it exemplifies.

One example of such a "difficult" multi-modal task is a "counting task" which requires counting the number of objects of a defined type in the input image of the input dataset. The term "object" in this case refers to any item which can be depicted in the input image, including animate ones (e.g. animals or people). In an implementation, at least some of the training example tuples generated are "counting tuples" for which obtaining the sample token output from the sample input dataset requires counting a number of objects of a defined type which are present in the input image of the sample input dataset.

Furthermore, counting tasks are more difficult if the number of objects to be counted is high, e.g. over three. For that reason, in an implementation, at least some of the "counting tuples" are ones for which obtaining the sample token output from the sample input dataset requires counting a number of objects of a given type which is above a threshold, such as three, five or ten.

A counting task is more difficult if the definition of the type of the objects is more complex. For example, some conventional VLMs have more success in solving multi-modal tasks in which the objects are defined simply (e.g. "people") than in complex ways (e.g. "people wearing a hat"). Thus, one can distinguish between "simple" counting tasks, e.g. in which the type of object to be counted is defined by a single noun, and "complex" counting tasks in which the type of object to be counted is defined by multiple words (e.g. multiple nouns, adjectives and/or adverbs).

Another example of a difficult multi-modal task is one which requires correctly describing positional relationships between objects present in the input image (e.g. whether an object in the input image is to the left of another object). In an implementation at least some of the training example tuples generated are "positional tuples" for which obtaining the sample token output from the sample input dataset requires identifying a positional relationship between two objects, e.g. of defined types, in the input image.

Another example of a difficult multi-modal task is one which require distinguishing between people having different corresponding postures. For example, one relatively difficult counting task requires counting only people who have a defined posture (e.g. people who are sitting). In these situations, the VLM often incorrectly includes in the count people who have a different posture. Thus, in an implementation at least some of the training example tuples generated are "posture tuples" for which obtaining the sample token output from the sample input dataset requires recognizing a posture of a person in the input image.

Note that a single tuple may qualify as more than one of a "counting tuple", a "positional tuple", and a "posture tuple". For example, if the sample token output is "There are four apples to the left of a sitting man", then the corresponding tuple is in all three categories.

Further categories of "difficult" tuples may be defined, and tuples exemplifying these categories may be generated also.

As well as the input image, the sample input dataset of each training example tuple may contain one or more input text tokens. These too may be produced (automatically) by the text generator, any may include at least part of the text description. The corresponding sample token output represents a text response to the input image of the sample input dataset and the one or more input text tokens.

In some implementations, at least some of the training example tuples exemplify an image captioning task, and the token output is a text caption for the input image of the image dataset.

In some implementations, at least some of the training example tuples exemplify a visual question-and-answer (VQA) task, in which each input dataset comprises one or more input text tokens which represent a question about the input image of the input dataset, and the token output represents a text answer to the question about the input image. Some or all of the counting tuples and/or positional tuples may exemplify a VQA task.

The text generator may obtain the one or more input text tokens of the sample input database by completing fields in a question template, by adding data to the fields based on at least part of the text description. For example, the text description may be used to provide at least one definition of a type of object ("object definition"), and then that object definition may be used to fill a gap in a question defined by the question template. For example, if the text description reads "5 red apples" (i.e. the text-to-image model neural network should generate an image including 5 red apples), the words "red apples" may be extracted from the text description as an object definition. The question template may read "How many [object] are there?", and the text generator may complete the field [object] by filling in the object definition. Thus, the input text tokens of the sample input dataset would be "How many red apples are there?"

There may be a multiple question templates, and different ones of the question templates may be used to form different ones of the tuples. For example, different ones of the tuples exemplifying a VQA task may be based on different ones of the question templates, e.g. phrasing a corresponding question in different ways, or asking different types of questions "Are there more of [object] than [object]?". This question template is appropriate in a case that the text definition defines objects of more than one type, e.g. "5 red apples and 3 green apples".

To mimic different levels of difficulty in different tasks the trained VLM will be used to perform, the training example tuples, particularly those which exemplify VQA tasks, may in an implementation be of differing levels of difficulty. For example, they may comprise first tuples for which the one or more input text tokens of the sample input dataset define a first type of objects in the image as objects which meet a first criterion (e.g. the input text tokens may read "how many apples are there?", where the object definition of the first type of objects is "apple", i.e. the object definition is objects which meet a first criterion of being an apple), and second tuples for which the one of more input text tokens of the sample input dataset define a second type of objects in the image as objects which meet both the first criterion and a second criterion (e.g. the input text tokens may read "how may green apples are there?", where the object definition of the second type of objects is "green apple", i.e. the object definition of the second type of objects is objects which meet the first criterion of being an apple, and a second criterion of being green).

Although some existing text-to-image converters perform to a high accuracy, they are not perfect, and that is particularly true for sorts of input images which are present in the input dataset for some difficult multi-modal tasks. For example, many text-to-image converters are unreliable when producing images containing a specific number of objects of a certain type.

For that reason, after the generation of an image by the text-to-image model from the text description, there is, in an implementation, a step of determining whether the generated image meets a correctness criterion with respect to the text description (i.e. whether the content of the image is indeed according to the text description). If not, no tuple may be created and/or stored, or the text-to-image model may produce a new image according to the text description. In other words, the addition of the tuple to the training database is performed only if the image of the tuple is determined to meet the correctness criterion. Filtering out some of the training example tuples in this way does not make the computational burden of the method unacceptably high since, in implementations, the computational burden of generating each of the training example tuples is very low.

The determination of whether each generated image meets a correctness criterion may include obtaining a numerical value characterizing a likelihood that the image meets the correctness criterion, and determining whether the numerical value is above a threshold. The image is determined to meet the correctness criterion if the numerical value is above the threshold.

In the case of a counting tuple, the determination of whether the generated image meets the correctness criterion may include counting (e.g. automatically by an object detection neural network) the objects of the defined type in the generated image, and determining whether the counted number of objects of the defined type is equal to the number of objects specified by the text description.

In the case of a positional tuple, determining whether the generated image meets the correctness criterion may include identifying (e.g. automatically by the object detection neural network) the positions of the objects of the types defined by text description in the generated image; and determining whether the identified positions have the positional relationship specified by the text description.

Once the VLM has been trained, it may be used for performing a multi-modal task on an input dataset received by the VLM and comprising an input image (e.g. an image of the real world), to generate a token output comprising text tokens from a vocabulary of text tokens and representing a text response to the input dataset. Example applications of the trained VLM are given below.

Optionally, the trained VLM may be used to as part of a system for improving a text-to-image model. For example, images sampled from a database of images may be used to generate corresponding input datasets, and those datasets may be input to the VLM to generate corresponding token outputs which are a text description of the images. The pairs of corresponding text descriptions and sampled images may then be used as ToI training examples for the text-to-image model, i.e. such that the text-to-image model is trained, upon receiving one of the text descriptions, to generate a reconstructed image resembling the corresponding sampled image. This may be done by iteratively modifying the text-to-language model to reduce the value of a text-to-image loss function including a reconstruction loss term indicative of a discrepancy between the images selected from the image database, and the corresponding reconstructed images generated by the text-to-image model.

For example, many text-to-image models generate a distribution function over a space of images conditioned on a text description received by the text-to-image model, and generate an image based on this distribution function over the space of possible images (e.g. if the distribution function is a probability distribution, sampling an image from the probability distribution; or by finding an image for which the distribution is maximal). In this case, the training of the text-to-image model may train the text-to-image model, upon receiving one of the text descriptions generated by the VLM based on an image from the database of images, to generate a posterior distribution for which the corresponding image selected from the input database has a high value.

Optionally, at least some the training of the VLM and the text-to-image model may be performed jointly (i.e. with updates to the VLM being performed concurrently with updates to the text-to-image model). Thus, the VLM and the text-to-image model may improve together. Joint training also tends to produce cycle consistency. This means that when the trained VLM receives an input dataset including an image generated by the text-to-image model based on a text description, VLM tends to output the same text description. In this way, the text-to-image model and the VLM are both made more reliable.

In implementations of the techniques described above, the VLM may be any known VLM. The input text tokens are typically selected from the same vocabulary as the text tokens of the token output, though in some implementations the vocabularies may be different (e.g. the input text tokens may be selected from the Roman alphabet, and the output tokens may be selected from a Japanese character set, such that the VLM performs a translation operation, conditioned on the image of the input dataset). The tokens in the vocabulary/vocabularies can be any appropriate text tokens, e.g., words, word pieces, punctuation marks, and so on that represent elements of text in one or more natural languages and, optionally, numbers and other text symbols that are found in a corpus of text. The vocabulary(-ies) may also include pre-defined tokens labelling positions in input dataset, e.g. the input text tokens may include a text token indicating the start/end of a phrase formed by other input text tokens, or indicating that a given input text token is the last input text token of the input dataset.

Note that if the input dataset to a VLM contains no input text tokens (e.g. it just contains an input image, then the VLM may be configured to generate the token output based on the input image in the input dataset alone, e.g. as a text description of the content of the input image).

Optionally, during the training, updates to the VLM are made to minimize both a (VLM) loss function which is a sum of multiple terms, including the multi-modal loss term. For example, the VLM loss function may be defined as a weighted sum of the multi-modal loss term and one of more other optional terms, such as terms which ensure that the parameters of the VLM are correctly normalised.

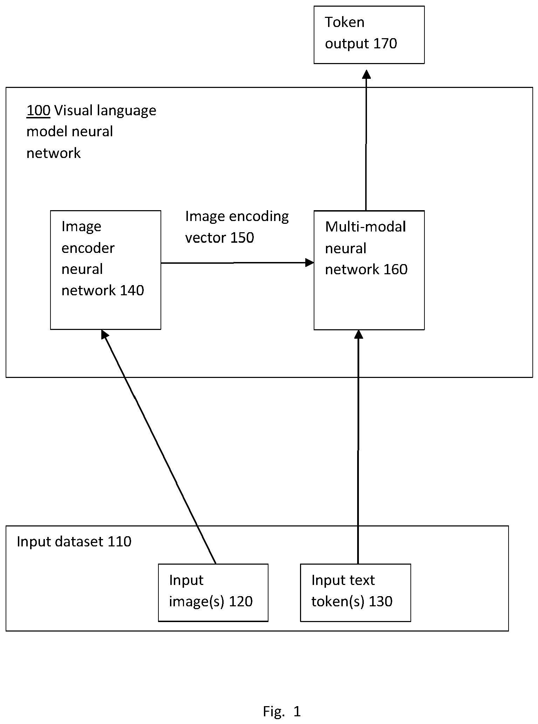

FIG. 1 is a diagram of an example visual language model neural network (VLM) 100. For example, the Flamingo model described in "Flamingo: a Visual Learning Model for Few-Shot Learning", J-B Alayrac et al (2022), https://arxiv.org/pdf/2204.14198.pdf has the structure shown in FIG. 1.

The VLM 100 is configured to receive an input dataset 110 including an input image 120 and one or more input text token(s) 130. The input image 120 may be of any form, e.g. a still image or a video image, and may for example be images of a real world environment captured by one or more (still or video) cameras. Each text token is selected from a vocabulary, typically the characters of a natural language. In one example, the vocabulary may be the Roman alphabet.

In some cases, though not necessarily, the input dataset 110 includes a plurality of input text tokens 130 forming a string. For example, the string may ask a question relating to the input image 120. One of the input text tokens may be a predetermined input text token indicating that it is the last input text token of the string.

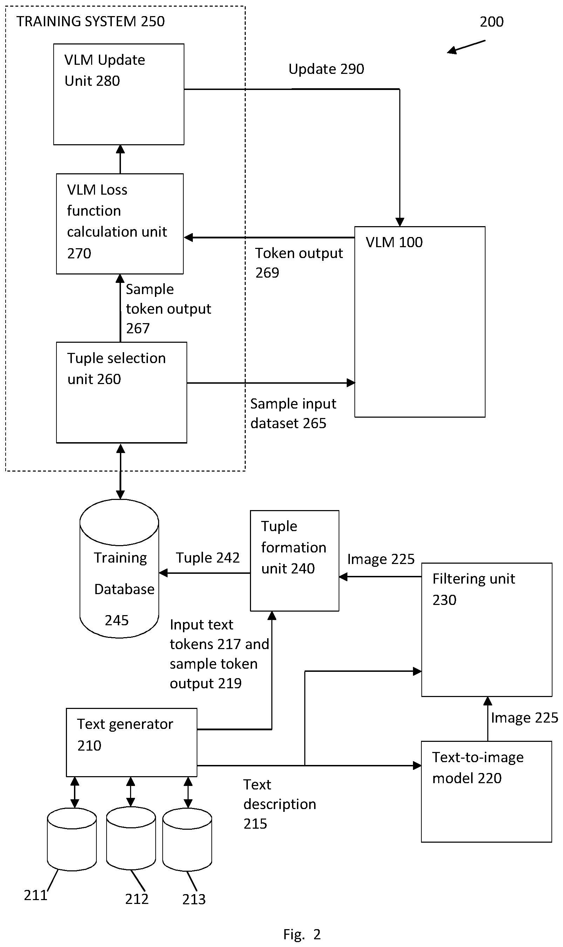

The VLM 100 has been trained, e.g. at least partially by methods described below with reference to FIGS. 2-7, to perform multi-modal tasks. The VLM 100 comprises an image encoder neural network 140 and a multi-modal neural network 160.

A multi-modal task, as used in this specification, is one that requires processing the input dataset 110 to generate a token output 170 that includes a sequence of text tokens selected from a vocabulary. Typically, this is the same vocabulary from which the input text tokens 130 are selected, although in principle it may be a different vocabulary, e.g. the input text token(s) 130 may be selected from first vocabulary (e.g. the Roman alphabet) and the text tokens of the token output 170 may be selected from a second, different vocabulary (e.g. the hiragana, katakana and kanji characters of the Japanese language).

Optionally, the multi-modal neural network 160 receives the input text tokens as a sequence ("input sequence"), e.g. at successive times it receives successive respective strings which are each a consecutive subset of the input text tokens, which each begin from a first of the input text tokens and which are each (except the first string) one input text token longer than the preceding string. Also, at each time (except the first) the string may include any tokens of the token output which the multi-modal neural network 160 generated at previous times.

More specifically, to generate a particular text token, the multi-modal neural network 160 can process the corresponding string and the image encoding vector 150 to generate a score distribution, e.g., a probability distribution, that assigns a respective score, e.g., a respective probability, to each token in the second vocabulary. The multi-modal neural network 160 can then select, as the particular text token of the token output 170, a text token from the second vocabulary using the score distribution. For example, the multi-modal neural network 160 can greedily select the highest-scoring token or can sample, e.g., using nucleus sampling or another sampling technique, a token from the distribution.

The multi-modal neural network 160 may apply relative position encodings to the input text tokens of one or more of the strings prior to processing the string using the plurality of layers. Applying relative positional encodings refers to obtaining an embedding of each input text token of the string based on the position of the token in the string.

Examples of multi-modal tasks are described in more detail below.

The image encoder neural network 140 is a neural network that is configured to receive an image 120 and to process the image 120, e.g., to process the intensity values of each of one or more colors of the pixels of the image, to generate an image encoding vector 150 characterizing the image 120. If the image 120 is a video image which includes multiple frames, the image encoder neural network 140 may be configured to receive them sequentially, and to generate a respective image encoding vector 150, or portion of the image encoding vector 150, for each of the frames.

An "encoding vector," as used in this specification is a vector of numeric values, e.g., floating point or other type of numeric values, that typically has a predetermined dimensionality, e.g., has a predetermined number of values. In some cases, the image encoding vector may comprise a sequence of "embeddings" for different respective portions of the input image. If the input image is a video image, the respective imaging encoding vector 150 may optionally have a structure which includes sections for each frame, or for each group of frames, of the video image.

The image encoder neural network 140 can generally have any appropriate architecture that maps the input image to an image encoding vector 150.

For example, the image encoder neural network 140 can include a convolutional neural network. As a particular example, the convolutional neural network can be configured to process the input image 120 to generate an output tensor characterizing the input image, and the image encoder neural network 140 can be configured to map the output tensor to the image encoding vector. That is, the image encoder neural network 140 can include (i) the convolutional neural network and (ii) an additional component that maps the output tensor to the image sequence. For example, the additional component can apply a linear transformation to linearly map the output tensor to *D* * *n* channels, and then reshape the result as a sequence of *n* embeddings, each with dimensionality *D.*

The image encoding vector(s) corresponding to the input image 120 are input to the multi-modal neural network 160 which also receives the input text token(s) 130. The multi-modal neural network 160 is a neural network that is configured to receive as input the image encoding vector(s) 150 and the input text token(s) 130 (if any) and to process the input to generate the token output 170.

Turning to FIG. 2 a system 200 is shown for training a VLM, such as the VLM 100 of FIG. 1. The system 200 of FIG. 2 is an example of a system implemented as computer programs on one or more computers in one or more locations, in which the systems, components, and techniques described below can be implemented.

The system 200 is configured to generate a plurality of training example tuples ("tuples") composed of sample input datasets and corresponding token outputs, at each of plurality of respective successive timesteps.

The system 200 includes a text generator 210, which may be a large language model (LLM). The LLM is operative to generate a text description 215, describing the content of an image which is to be created later (a "possible image").

The text generator 210 may, for example, be the Chinchilla model of "Training compute-optimal large language models", J. Hoffmann et al, 2022, or the trained language model of Brown et al, "Language models are few-shot learners", in Conference on Neural Information Processing Systems, 2020.

Optionally, the text generator 210 may have access to one or more template databases: a description template database 211, a question template database 212 and token output template database 213.

The description template database 211 stores one or more description templates for the text generator 210 to use to generate the text description 215. For example, a description template may read "There are [number][object] and [number][object] in the image", where [number] and [object] are fields to be completed, respectively with an integer and an object definition. The text generator 210 may complete the fields, to produce a text description "There are four green apples and three red apples in the image". There may be one or more description templates for multi-modal tasks of each type. The text generator 210 may use one of the description templates for each type of task for a certain (e.g. specified) proportion of the text descriptions that it generates, so that a specified proportion of training examples exemplify each type of task.

The question template database 212 stores one or more question templates for the text generator 210 to use to generate input text tokens 217 expressing a question. For example, a question template may read "Are there more [object] than [object]?", where each instance of [object] is a field to be completed with an object definition. The text generator 210 may complete the fields, to produce input text tokens, e.g. "Are there more green apples than red apples?" Note that for some training example tuples, the input dataset does not include any input text tokens, and for such tuples no input text tokens 217 are generated.

The token output template database 213 stores one or more token output templates for the text generator 210 to use to generate a sample token output 219. For example, a token output template may read "[yes/no], there are [number][object] and [number][object] in the image", where [yes/no] is a field to be completed by "yes" or "no", and [number] and [object] are fields to be completed with integers and object definitions respectively. The text generator 210 may complete the fields, to produce a sample token output "Yes, there are four green apples and three red apples in the image".

In another example (for use in creating a positional training example tuple), a description template may read "[number] of [object] [positional relationship] [number] of [object]", where [number] [positional relationship] and [object] are fields to be filled in by the text generator, i.e. by adding an integer to fill each [number] field, a positional relationship (e.g. "to the left of') to fill each [positional relationship] field, and an object definition to fill each [object] field. The question template may read "Is the [object] to the [positional relationship] of the [object]. The token output template may read "[Yes/No]". The text generator 210 may complete the fields to create a text description 215 "A red cat to the left of a black dog", input text tokens 217 "Is the red cat to the left of the black dog", and a sample token output 219 "Yes".

Note that in generating the input text tokens 217, sample token outputs 219 and text descriptions 215 the text generator 210 is not bound to use the template exactly. For example, it can vary it so that grammatical rules are observed.

In each time step, the text generator 210 may select one type of multi-modal task to exemplify as a tuple. Using the corresponding templates, it creates one sample token output 219, one text description 215 and (in the case of a tuple for which the exemplified multi-modal task employs input text tokens) one set of input text tokens 217. They are created to be consistent, i.e. the sample token output 219 may be the answer to a question expressed by the input text tokens 217, about an image which fulfils the text description 215.

The text description 215 is input to a text-to-image model 220, which uses it to generate an image 225. The text-to-image model 220 may be a diffusion model (a class of latent variable models which learn the latent structure of a dataset by modeling the way in which data points diffuse through the latent space). Examples include Imagen (C Saharia et al, "Photo-realistic text-to-image diffusion models with deep language understanding", 2022, arXiv:2205.11487)

The image 225 and the text description 215 are input to a filtering unit (object detection unit) 230, which uses them to check that the image 225 is consistent with the text description 215. If not, the process for generating the tuple may terminate, and a new tuple generation process may begin at the next timestep. Alternatively, the filtering unit 230 may be configured to instruct the text-to-image model 220 to produce a new image 225. The filtering unit 230 may be implemented using the OWL-ViT open vocabulary object detection network (M. Minderer et al, "Simple Open-Vocabulary Object Detection with Vision Transformers", https://arxiv.org/pdf/2205.06230.pdf (2022)).

If the filtering unit 230 determines that the image 225 is consistent with the text description 215, it passes the image 225 to a tuple formation unit 240. The tuple formation unit 240 generates a sample input dataset containing the image 225 as an input image, and the input text tokens 217 (if any), and creates a tuple 242 as the sample input dataset in combination with the corresponding sample token output 219. The tuple formation unit 240 adds the tuple 242 to a training database 245. The tuple may optionally be provided with a label indicating what multi-modal task it exemplifies (e.g. a "complex" task or a "simple" one; a captioning task or a VQA task; a positional task or a counting task; and/or, in the case of a counting task, how many objects are to be counted). The training database may optionally also contain training example tuples from another source, e.g. ones created manually.

Once the number of training example tuples in the training database 245 meets a criterion (e.g. it is greater than a threshold), the generation of training example tuples may cease.

Subsequently, the VLM 100 is trained using the training example tuples in the training database 245. This may be done by a known VLM training system 250, such as the example used in the Flamingo model.

For example, a tuple selection unit 260 may select a tuple (or batches of tuples) from the database 245. This may be done at random. However, in one option, this may be done based on the labels for the tuples, e.g. to ensure that specified proportions of tuples exemplifying different forms of multi-modal task are employed. For example, the tuple may select tuples according to a rule which specifies that a certain proportion of the tuples exemplify a VQA task or a captioning task, and/or which specifies that a certain number of the tuples are such that the token outputs and/or the questions defined by the input text tokens, meet a criterion for being "simple" or a criterion for being "complex".

The tuple selection unit 260 transmits the sample input dataset 265 from the tuple to the VLM 100, and the sample token output from the tuple to a VLM loss function calculation unit 270.

The VLM 100 generates a token output 269, and transmits it to the VLM loss function calculation unit 270.

The VLM loss function calculation unit 270 outputs the value of the VLM loss function (indicative of a discrepancy between the sample token output and the token output 269 generated by the VLM 100). For example, the token output 269 may be include, for each token of the sample input text tokens of the sample input dataset 265 a corresponding distribution function over the vocabulary of the output tokens, and the value of the VLM loss function may be inversely related to the value of some or all text tokens of the sample token output 267 under the distribution function. Optionally, the VLM loss function may contain additional terms, e.g. for normalization of parameters defining the VLM 100.

Typically, the VLM loss function calculation value averages the value of the VLM loss function over the corresponding values of the VLM loss function for a plurality (batch) of training example tuples selected from the training database 245.

A VLM update unit 280 generates an update 290 to some or all parameters defining the VLM 100 to reduce the value of the VLM loss function.

This iterative procedure is performed many times to train the VLM.

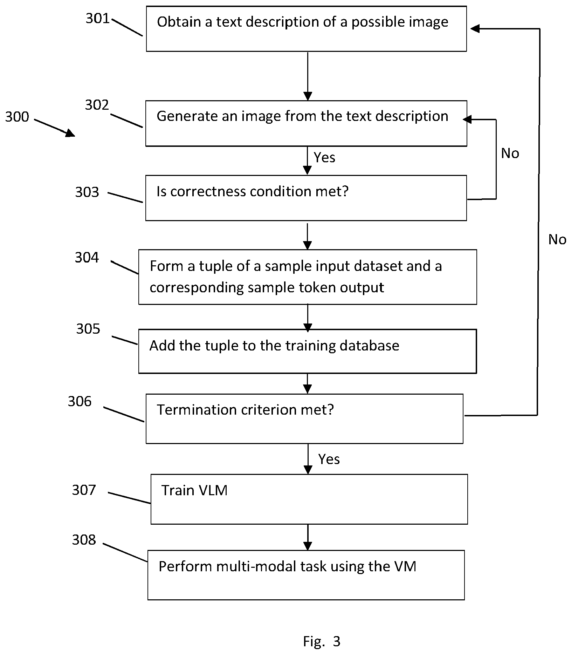

Turning to FIG. 3, the steps of a method 300 of generating a VLM are shown. For example, the method 300 may be performed by the system 200 of FIG. 2. For that reason, the reference numerals from the system 200 are used below, but it is to be understood that the method 300 is not limited to systems having exactly the structure of the system 200.

In step 301, a text generator 210, which is a large language model, generates a text description 215. The text generator 210 may also generate a corresponding sample token output 219 and (in the case of training example tuples which contain input text tokens) input text tokens 217.

In step 302, the text-to-image model 220 generates an image based on the text description 215.

In optional step 303, the filtering unit 230 (object detection network) detects objects in the image 225, and checks whether the image 225 meets a correctness condition, namely that it is consistent with the text description 215.

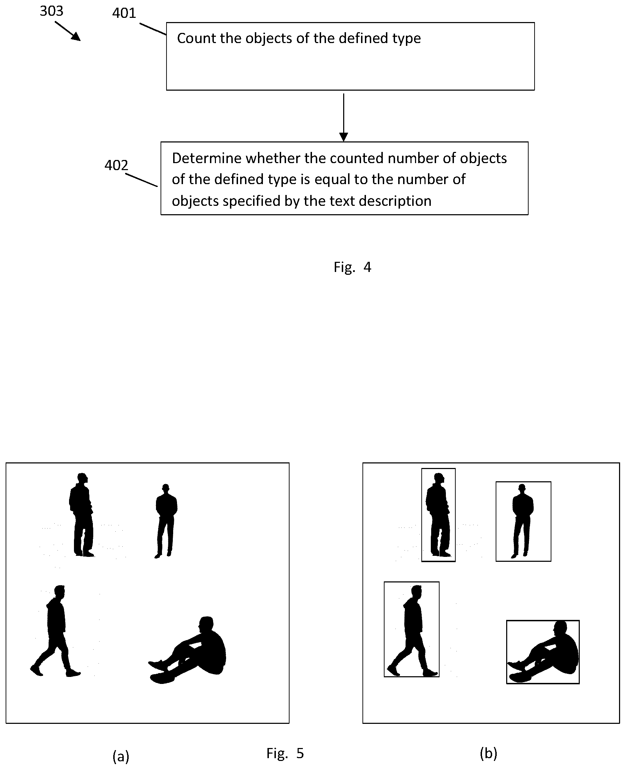

For example, step 303 may comprise a pair of sub-steps shown in Fig. 4. This is performed in the case that the tuple is one which exemplifies a counting tuple.

In sub-step 401, the filtering unit 230 identifies objects of a type (or types) defined by the text description 215, and counts the objects of each type. In sub-step 402, the filtering unit 215 determines whether the counted objects of each type is equal to the number of objects specified by the text description 215. If so, the image 225 is determined to be consistent with the text description 215.

For example, if the text description is "Three standing people and one sitting person", the image 225 may be as shown in FIG. 5(a). In sub-step 401, the filtering unit 230 identifies objects in the image which meet the object definitions ("standing person", "sitting person") of the text description, and draws a bounding box around each, as shown in FIG. 5(b). It identifies that there are three objects meeting the object definition "standing person", and one object meeting the object definition "sitting person". This is consistent with the text description 215, so in sub-step 402 the filtering unit 230 makes a positive determination. Note that filtering unit 230 would not have done this if the image 225 had been as shown in FIG. 5(a) but the text description had read "Two standing people and two sitting people".

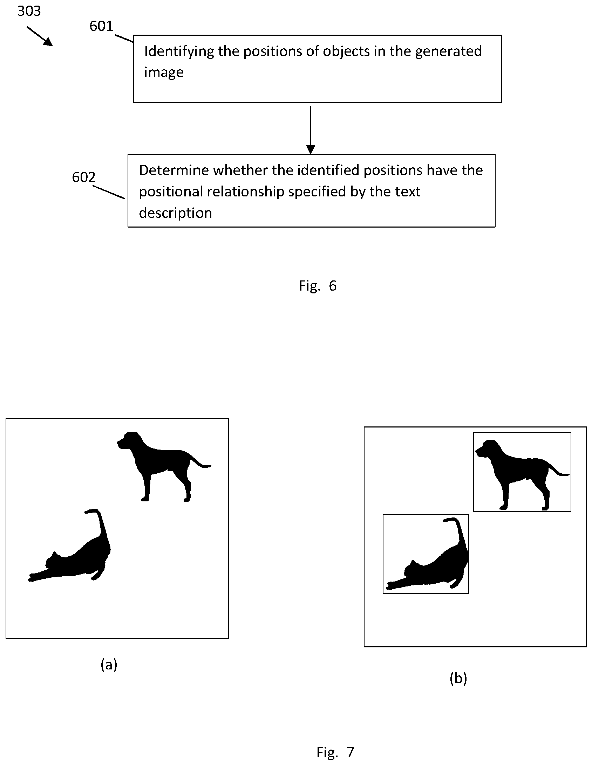

In another example, the step 303 may comprise a pair of sub-steps shown in Fig. 6. This is performed in the case that the tuple is one which exemplifies a positional tuple. In sub-step 601, the filtering unit 230 identifies the objects of a type (or types) defined by the text description 215, and finds their positions. In sub-step 602, the filtering unit determines whether the positional relationship of the objects is as specified by the text description 215. If so, the image 225 is determined to be consistent with the text description 215.

For example, if the text description is "A dog to the upper right of a cat", the image 225 may be as shown in FIG. 7(a). In sub-step 401, the filtering unit 230 identifies objects in the image which meet the object definitions ("dog", "cat") of the text description, and draws a bounding box around each, to give the image shown in FIG. 7(b). In sub-step 602 the filtering unit 230 identifies that the bounding box containing the dog is to the top right of the one containing the cat. This is consistent with the text description 215, so in sub-step 601 the filtering unit 230 makes a positive determination. Note that filtering unit 230 would not have done this if the image 225 had been as shown in FIG. 7(a) but the text description had read "A dog to the left of a cat" or "A cow to the upper right of a cat".

Returning to FIG. 3, if the determination in step 303 is negative, the method 300 returns to step 302. In a variation, it may return to step 301.

If the determination in step 303 is positive, then in step 304, the tuple formation unit 240 forms a sample input dataset from the input text tokens 217 (if any) and the image 225, forms a tuple 242 from the sample input dataset and the sample token output 219, and inserts the tuple 242 into the training database 245 in step 305. Note that the tuple 242 may be provided with a label indicating which multi-modal task it exemplifies (e.g. a "complex" task or a "simple" one; a captioning task or a VQA task; a positional task or a counting task; or, in the case of a counting task, how many objects are to be counted, since counting a larger number of objects is harder).

It is then determined in step 306 whether a termination criterion is met, e.g. that a threshold number of tuples has been reached. If not, the method returns to step 301. If so, in step 307 the VL 100 is trained by a known VLM learning algorithm (e.g. using the training system 250).

Once the VLM has been trained, it can be used for a multi-modal task on new input datasets (step 308).

In a variation of the method of FIG. 3 ("no filter") step 303 is omitted (i.e. the method passes from step 302 straight to step 304). In this case, the filtering unit 230 can be omitted from the system 200 of FIG. 2, and the image 225 is sent directly from the text-to-image model 220 to the tuple formation unit 240.

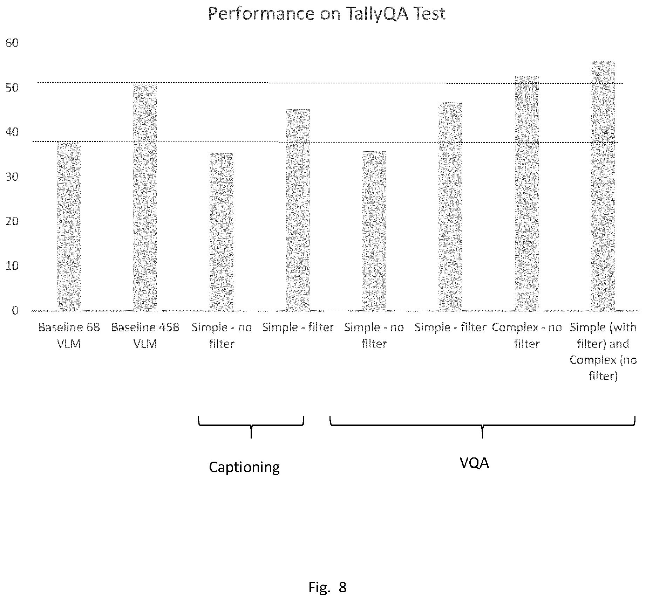

Turning to FIG. 8, experimental results are provided of examples of the present disclosure. Performance is shown for on the TallyQA test (M. Acharya et al, "TallyQA: Answering Complex Counting Questions", 2018, arXiv:1810.12440). As baselines, the performance is shown (the left two bars of FIG. 8) of two baseline VLMs: a VLM model having 6B (6 billion) variable parameters, and a VLM model having 45B parameters. The horizontal dashed lines indicate these baselines. Both these Baseline VLMs resemble the Flamingo model.

The next 6 bars of FIG. 8 show experimental results from re-training (i.e. fine-tuning) a pre-trained Baseline 6B VLM using a manually curated training database composed of tuples generated by the method 300 of FIG. 3 for various possibilities:
1. All the training example tuples exemplify a simple captioning task with no filtering unit 230 (Captioning - simple - no filter).
2. All the training example tuples exemplify a simple captioning task with a filtering unit 230 (Captioning -simple - filter).
3. All the training example tuples exemplify a simple VQA task with no filtering unit 230 (VQA -simple - no filter).
4. All the training example tuples exemplify a simple VQA task with a filtering unit 230 (VQA - simple - filter).
5. All the training example tuples exemplify a complex VQA task with no filtering unit 230 (VQA- complex - no filter).
6. Each of training example tuples exemplifies either a simple VQA task with a filtering unit 230, or a complex VQA task with no filter (VQA - simple (with filter) and complex (no filter)), with roughly equal number of each of the two kinds of tuple.

In cases 1 and 3, as shown in Fig. 8, the resulting VLM performed slightly less well than the Baseline 6B VLM. Note however the cost of generating the training database was less than the cost of producing the manually curated database used to produce the Baseline 6B VLM which provides the baseline.

The performance of all of cases 2 and 4-6 exceed the Baseline 6B VLM, although the trained VLM had the same number (6 billion) of trained parameters. Cases 5 and 6 even exceeded the performance of the Baseline 45B VLM, although the Baseline 45B VLM had 7.5 times as many trained parameters. Accordingly, the present techniques provided a dramatic increase in performance relative to the baselines.

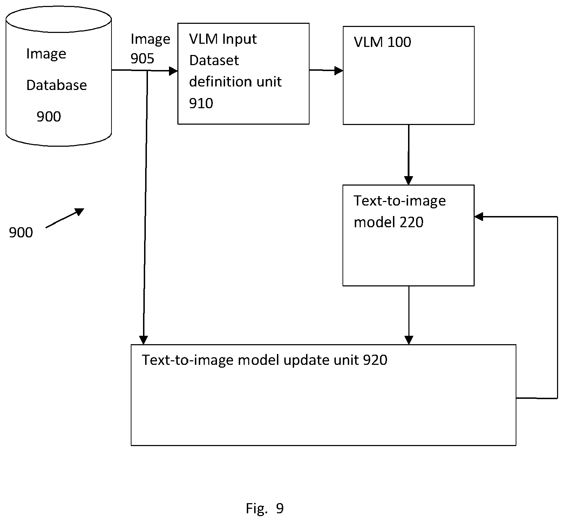

One application of the trained VLM is to improve a text-to-image model. FIG. 9 shows a system 900 in which this can be performed. The system 900 is an example of a system implemented as computer programs on one or more computers in one or more locations, in which the systems, components, and techniques described below can be implemented.

The system 900 uses an "image database" 900 of images (e.g. captured images of the real world). Images 905 are successively sampled from the image database, and transmitted to a VLM input dataset definition unit 910 which, for each image 905, generates an input dataset comprising the image 905. The input dataset is input to a VLM 100, which uses it to generate a token output. The token output is input to the text-to-image model 220. From the token output of the VLM 100, the text-to-image model 220 generates a new image, and transmits it to a text-to-image model update unit 920, which receives also the corresponding image 905 sampled from the image database 900.

The text-to-image model update unit 920 obtains a TtI loss function which characterizes the difference between the image 905 sampled from the image database 900, and the corresponding image generated from it by the VLM 100 and the text-to-image model 220. For example, if the output of the text-to-image model 220 is a distribution function over the space of possible images, the TtI loss function may be inversely related to the value of the sampled image 905 according to the distribution function. The text-to-image model update unit 920 forms an update to the text-to-image model 220 to decrease the value of the TtI loss function. This improves the performance of the text-to-image model 220. The process may be performed multiple times iteratively, to improve the text-to-image model 220.

The systems 200 and 900 may be used concurrently, to train the VLM 100 and the text-to-image model 220 jointly (i.e. with successive updates to the VLM 100 and text-to-image model 220 being performed substantially simultaneously or interleaved with each other).

For example, using a current state of the text-to-image model 220, training example tuples may be generated by the system 200 and used to form (or augment, or replace the oldest tuples in) training database 245 (e.g. according to steps 301-306 of method 300), and an update is made to the VLM 100 using the training database 245. Additionally (e.g. concurrently), using a current state of the VLM 100, an update is made to the text-to-image model 220 using the system 900. This process is repeated many times, to train the VLM 100 and text-to-image model 220 jointly.

Training the VLM 100 and the text-to-image model 220 jointly in this way means that both improve. Furthermore, "cycle consistency" is improved, such that the token output generated by a VLM based on an image generated by the text-to-image model, is likely to match the text description which the text-to-image model used to generate the image. Improving cycle consistency is a measure of the reliability of both the text-to-image model 220 and the VLM 100.

Thus, the subject matter described in this specification can be implemented in particular embodiments so as to realize the advantages that a training database for VLM learning can be created with much less cost than known methods, thereby reducing the overall cost of obtaining the VLM. Furthermore, because the training database can be created including difficult training examples (e.g. including specified proportions of each of one of more types of difficult training examples, and/or with type of each training examples labelled such that it is that specified numbers of each type of difficult training examples can be used in the training), the performance of the trained VLM is improved. Furthermore, joint training of a VLM and text-to-image model is made possible, also enabling cycle consistency to be achieved.

The trained VLM resulting from method 300 of FIG. 3 (e.g. the trained VLM 100 of FIG. 1, but as noted the present techniques are applicable also to VLMs which do not have the internal structure shown in FIG. 1) has a number of technical applications. For example, the image 120 of an input dataset 110 may be an image of the real world captured by a camera, and the token output 170 may be text describing the real world. In particular, the token output 170 may answer a question about the real world posed by text included in the input dataset 120. Thus, one technical application of the VLM 100 is to be used by a visually-impaired user to obtain information about the input image 120. For example, the VLM 100 may be part of a computer system which obtains the input image 120 (e.g. using a camera of the computer system). The user can supply the input text tokens 130 (e.g. by controlling a data input device, or by speaking a command which is converted into text by the computer system, e.g. a string of letters or tokens representing phonemes). The VLM system 100 can then generate the token output 170, e.g. as a string of tokens which are converted into a sound signal which is broadcast to the user by a speaker device. A useful feature of this computer system is its flexibility, since the user may freely define the information which the query processing system should extract from the input image 120.

Optionally, the computer system may be configured to allow a user (a person) to generate a series of multiple input datasets 110, each including the same input image 120 but with different respective text. For example, the text of a first input dataset 110 may be "What is shown in the picture?". If the query processing system generates, in response to the first input dataset 110, a corresponding token output 170 (e.g. "A bus"), then the person may be able to define a second input dataset 110 including the same input image 120 and with new text (e.g. "What destination is on the front of the bus?").

Optionally, each input dataset 110 in the series of input datasets 110, except the first input dataset 110 of the series, may include the input text tokens and the token output 170 from one or more of the previous input datasets 110 in the series. In this way, the person may engage in a coherent discussion with the VLM 100 about the input image 120 (which are typically included in all the input datasets 110 of the series), in which at each stage the VLM 100 generates a token output 170 which is a sensible continuation of the earlier part of the discussion.

Another technical application of the VLM 100 is a captioning system for an image 120, particularly in the case that the image 120 is a video segment (moving image). The text of the input text tokens 130 may define an image processing task such as "provide a caption explaining what is happening", and in this case the token output 170 may comprise a caption describing events or actions depicted in the image 120.

In another technical application, the image 120 comprises text, and the computer system might comprise an OCR (optical character recognition) system for extracting the text from the image 120 to generate at least part of some text in the input text token(s) 130. For example, if the image 120 is an image of a scene comprising a sign with instructions (e.g. the image may be an image of a road including a road sign including text), the OCR may generate the text of the input text tokens 130 based on the instructions in the image. In this case, the token output 170 may indicate the significance of the instructions, given the rest of the scene (e.g. in the case of an image 120 which is an image of an empty parking bay and a sign indicating that parking is allowable at the present time, the token output 170 may be "Please park here").

In another technical application, the input dataset 110 may instruct the VLM 100 to generate, as the token output 170, code executable by a processor of a computer system. For example, the input text token 130 may include text which reads "Generate HTML code which when executed generates a video image of the object shown in the image".

In the case that the input image 120 is a video image, the VLM 100 may operate as a video processing system that is configured to analyze a sequence of video frames to detect objects in the video frames and provide information relating to the detected objects in response to a question defined by the input token string. The questions may comprise, for example, a request for a prediction of a future event or state relating to one or more of the objects (e.g. "will objects X and Y collide?"), or a request for conditional or counterfactual information relating to one or more of the objects (e.g. "what event would [not] happen if object X is modified, moved or absent?"), or a request for analysis of the video frames to determine a property or characteristic of one or more of the objects (e.g. "how many objects of type Z are moving?").

The response to the question, the token output 170 may, for example, be in the form of a yes/no answer, or may define a probability distribution over a set of possible answers; or the response may define the location of an object. Implementations of the system are flexible in the types of question that can be defined, and a single implementation of the system can handle multiple different types of question. Merely by way of example, the system can be used to predict whether or not two objects will collide, or how this may be avoided. The response to the query may be used by a human or computer system in many ways. For example the analysis may be useful in itself, or it may be used to provide a warning and/or to control motion of one or more of the objects.

In another application, the VLM 100 may generate output data that categorizes the input images 120 into one or more of a plurality of categories, e.g. by defining a score for each category of a plurality of possible categories for the data items. As another particular application, the multi-modal task may be to provide output data that defines (e.g. as a score) whether the input image is described by text comprised in the input text token(s) 130.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, which is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, e.g., inference, workloads.

Machine learning models can be implemented and deployed using a machine learning framework, .e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method of generating a visual language model neural network trained to perform a multi-modal task on an input dataset comprising at least one input image, to generate a token output comprising text tokens from a vocabulary of text tokens and representing a text response to the input dataset, the method comprising:
forming a training database by repeatedly:
(i) obtaining a text description of a possible image;
(ii) using a text-to-image model to generate an image from the text description; and
(iii) forming a tuple including a sample input dataset comprising the generated image, and a corresponding sample token output comprising at least part of the text description, and
(iv) adding the tuple to the training database; and
training a visual language model neural network based on the training database by iteratively modifying the visual language model neural network to reduce the value of a loss function including a multi-modal loss term indicative of a discrepancy between token outputs generated by the visual language model neural network upon receiving sample input datasets from the training database, and the corresponding sample tokens.

2. A computer-implemented method of forming a training database for training a visual language model neural network to perform a multi-modal task on an input dataset comprising at least one input image, to generate a token output comprising text tokens from a vocabulary of text tokens and representing a text response to the input dataset,
the method comprising repeatedly:
(i) obtaining a text description of a possible image;
(ii) using a text-to-image model to generate an image from the text description; and
(iii) forming a tuple including a sample input dataset comprising the generated image, and a corresponding sample token output comprising at least part of the text description, and
(iv) adding the tuple to the training database.

3. The method of claim 1 or 2 in which, for at least some of the formed tuples, the sample input dataset further comprises one or more input text tokens selected from a vocabulary based on at least part of the text description, the corresponding sample token output generated by the visual language model neural network representing a text response to the at least one input image of the sample input dataset and the one or more input text tokens.

4. The method of claim 3 in which the formed tuples include visual question-and-answer tuples in which the one or more input text tokens of sample input dataset define a question, and the corresponding sample token output is an answer to the question.

5. The method of claim 3 or claim 4 in which the one or more input text tokens of the sample input database are obtained by completing fields in a question template using at least part of the text description.

6. The method of any of claims 3-5, in which the tuples comprise first tuples for which the one or more input text tokens of the sample input dataset of the first tuple define a first type of objects in the image as objects which meet a first criterion, and second tuples for which the one of more input text tokens of the sample input dataset of the second tuple define a second type of objects in the image as objects which meet both the first criterion and a second criterion.

7. The method of any preceding claim, further including determining whether the generated image meets a correctness criterion based on the text description, the adding of the tuple to the training database being performed only if the image is determined to meet the correctness criterion.

8. The method of claim 7, in which determining whether the generated image meets a correctness criterion includes obtaining a numerical value characterizing a likelihood of the image meeting the correctness criterion, determining whether the numerical value is above a threshold, and determining that the image meets the correctness criterion if the numerical value is above the threshold.

9. The method of claim 7 or claim 8, in which at least some of the tuples are counting tuples for which the text description specifies a number of objects of a defined type,
the determining whether the generated image meets the correctness criterion including:
counting the objects of the defined type in the generated image, and
determining whether the counted number of objects of the defined type is equal to the number of objects specified by the text description.

10. The method of claim 9 in which counting the number of objects of the determined type is performed using an object detection neural network model.

11. The method of any of claims 7-10 in which at least some of the tuples are positional tuples for which the text description specifies a positional relationship between two objects, and the determining whether the generated image meets the correctness criterion includes:
identifying the positions of objects in the generated image; and
determining whether the identified positions have the positional relationship specified by the text description.

12. The method of claim 1, or any of claims 3-11 when dependent on claim 1, in which the training of the visual language model is performed jointly with training of the text-to-image model, by iteratively modifying the text-to-language model neural network to reduce the value of a text-to-image loss function including a reconstruction loss term indicative of a discrepancy between:
one or more images selected from an image database; and
one or more corresponding reconstructed images generated by the text-to-image model based on corresponding token outputs generated by the visual language model neural network upon receiving corresponding input datasets comprising the corresponding selected images.

13. A method of performing a multi-modal task on an input dataset comprising at least one input image, to generate a token output comprising text tokens from a vocabulary of text tokens and representing a text response to the input dataset, the method comprising inputting the input dataset into a visual language model neural network generated by a method of claim 1, or any of claims 3-12 when dependent on claim 1.

14. The method of claim 13 in which the at least one input image of the input dataset is a captured image of the real world.

15. A system comprising:
one or more computers; and
one or more storage devices storing instructions that, when executed by the one or more computers, cause the one or more computers to perform the method of any one of claims 1-14.

16. A computer-program product containing instructions that when executed by one or more computers cause the one or more computers to perform the method of any one of claims 1-14.
